Europäisches Patentamt

European Patent Office

Office européen des brevets

(11) Veröffentlichungsnummer: **0 343 325 B1**

(19)

(12) **EUROPÄISCHE PATENTSCHRIFT**

(45) Veröffentlichungstag der Patentschrift: **09.12.92**

(21) Anmeldenummer: **89104046.1**

(22) Anmeldetag: **08.03.89**

(51) Int. Cl.⁵: **A47J  27/62**, G05D 23/19

(54) **Dampfdruckkochtopf/Kochstellen-System.**

(30) Priorität: **27.05.88 DE 3818037**

(43) Veröffentlichungstag der Anmeldung:
**29.11.89 Patentblatt  89/48**

(45) Bekanntmachung des Hinweises auf die
Patenterteilung:
**09.12.92 Patentblatt  92/50**

(84) Benannte Vertragsstaaten:
**AT BE CH DE ES FR IT LI NL**

(56) Entgegenhaltungen:
**EP-A- 0 023 724**
**DE-A- 3 004 088**
**DE-A- 3 026 620**
**DE-A- 3 510 542**
**US-A- 2 495 603**

(73) Patentinhaber: **SILIT-WERKE GMBH & CO. KG**

**W-7940 Riedlingen(DE)**

(72) Erfinder: **Vorbach, Jörg L., Dipl. Kfm.**
**St.-Wendelinus-Strasse 58**
**W-7940 Riedlingen(DE)**

(74) Vertreter: **Goddar, Heinz J., Dr. et al**
**FORRESTER & BOEHMERT Franz-**
**Joseph-Strasse 38**
**W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Dampfdruck/Kochstellen-System mit den Merkmalen des ersten Teiles des Anspruchs 1.

Bei einem solchen aus der DE 35 10 542 A1 bekannten System ist ein "Kochregler" mit einem Magneten versehen, der auf ein Reed-Relais wirkt. Dieser "Kochregler" dient zur manuellen Einstellung verschiedener Kochstufen, er gibt also den "Solldruck" an. Ein Dampfdruckanzeiger zeigt den "Ist-Druck" an.

Der Erfindung liegt die Aufgabe zugrunde, das vorbekannte Dampfdruckkochtopf/Kochstellen-System derart weiterzubilden, daß eine automatische Regelung des Druck in dem Dampfdruckkochtopf erfolgt.

Erfindungsgemäß wird diese Aufgabe durch die im zweiten Teil des Anspruchs 1 angegebenen Merkmale gelöst. Der einzige Unteranspruch gibt eine vorteilhafte Ausgestaltung des Systems an.

Die Erfindung wird im folgenden anhand einer Zeichnung erläutert. Dabei zeigt:

Fig. 1     eine schematische Darstellung eines Dampfdruckkochtopfes und einer Kochstelle,

Fig. 2     eine die Verschaltung verdeutlichende Darstellung,

Fig. 3     eine Darstellung des auf den Deckelgriff aufgesetzten Adapters in einer Längsschnittdarstellung, und

Fig. 4     eine Darstellung des Regeladapters in einer Querschnittsdarstellung.

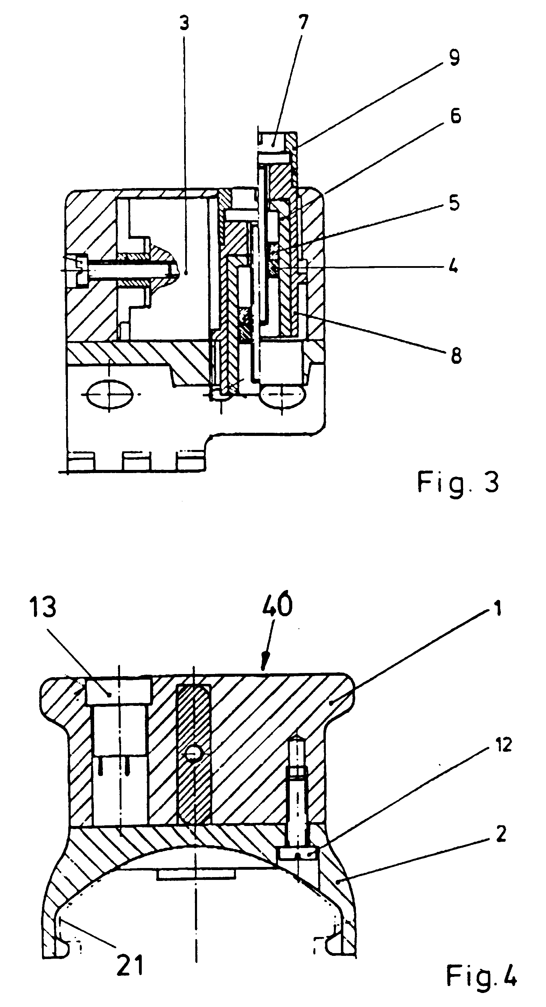

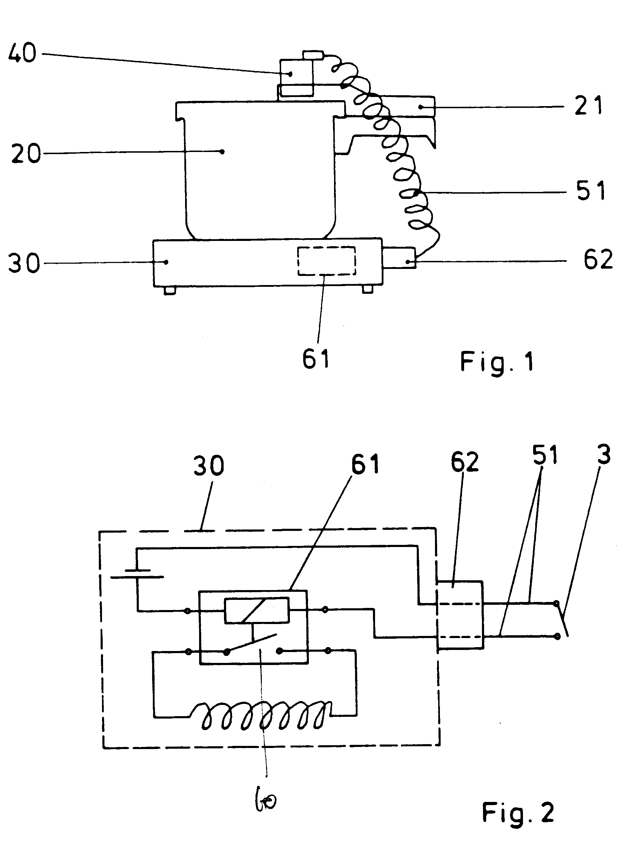

Fig. 1 zeigt einen Dampfdruckkochtopf 20, der auf einer Kochstelle 30, vorzugsweise einer Induktions-Kochstelle, steht. Der Dampfdruckkochtopf 20 ist mit einem Deckelgriff 21 versehen, der eine - zeichnerisch nicht dargestellte - Druckanzeige aufnimmt. Auf den Deckelgriff 21 ist ein Adapter 40 aufgesetzt, der die Druckanzeige in dem Deckelgriff 21 abfragt. Dieser Adapter 40 ist über ein Kabel 51 über ein Zeitglied 62 mit der Induktions-Kochstelle 30 verbunden, die mit einem Relais 61 versehen ist.

Fig. 2 verdeutlicht die Verschaltung. Ein in dem Adapter 40 angeordnetes Reed-Relais 3, ein Zeitglied 62 und der Steuerkreis eines Relais 61, dessen Arbeitskreis die Induktionsspule der Kochstelle 30 schaltet, liegen in einem durch das Kabel 51 geführten Stromkreis in Reihe. Bei Überschreiten eines bestimmten Drucks fällt das Reed-Relais 3, das in dem Adapter 40 auf dem Dampfdruckkochtopf 20 angeordnet ist, ab. Der Stromkreis wird unterbrochen, was zu einem Abfall der Arbeitskontakte des Relais 61 führt. Die Induktionsspule der Induktions-Kochstelle 30 wird nicht mehr mit Spannung versorgt, der Dampfdruckkochtopf kühlt ab. Der Druck in dem Dampfdruckkochtopf wird entsprechend wieder abfallen, was zu einem Betätigen des Reed-Relais 3 führt, woraufhin der Steuerstromkreis wieder durchgeschaltet ist und das Relais 61 wieder anzieht, so daß die Induktionsspule in der Kochstelle 30 wieder mit Energie versorgt wird. Die Schaltung bildet so einen geschlossenen Regelkreis, der das Konstanthalten des Drucks in dem Dampfdruckkochtopf sicherstellt.

Das Zeitglied 62 ist vorzugsweise einstellbar ausgebildet und dient dazu, den Kochvorgang nach einer ersten vorgewählten Zeitdauer durchzuführen und nach einer zweiten vorgegebenen Zeitdauer zu beenden. Das hier vorgeschlagene Dampfdruckkochtopf/Kochstellen-System ermöglicht es also, den Druck in dem Dampfdruckkochtopf ständig in einem gewünschten bereich zu halten, ohne daß es eines Eingriffs durch den Benutzer bedarf.

Fig. 3 zeigt eine Längsschnittdarstellung durch den auf dem Deckelgriff 21 des Dampfdruckkochtopfes 20 aufgesetzten Adapters 40. Dieser Adapter 40 besteht aus einem Gehäuse 1 und einem auf den Deckelgriff 21 aufgesetzten Sockel 2, wobei Gehäuse 1 und Sockel 2 über eine Schraube 12 (vgl. Fig. 4) miteinander verbunden sind. Das Gehäuse 1 nimmt ein gekapseltes Reed-Relais 3 und ein aus einem Unterteil 8 und einem Oberteil 9 bestehendes Anzeigegehäuse auf. Das Unterteil 8 des Anzeigegehäuses nimmt einen Magneten 5 und eine zur Justierung dienende Gewindescheibe 4 auf, wodurch der Magnet 5 über eine auf dem Oberteil 9 des Anzeigegehäuses sitzende Justierspindel 7 so eingestellt werden kann, daß das Reed-Relais 3 bei einem vorwählbaren Druck in dem Dampfdruckkochtopf anspricht.

Bei der hier als bevorzugte Ausgestaltung vorgeschlagenen Ausbildung des Mittels zum Erfassen einer dem jeweiligen Innendruck des Dampfdruckkochtopfs entsprechenden Information wird also ausgenutzt, daß bei üblichen Dampfdruckkochtöpfen bereits ein mechanischer Druckanzeiger vorgesehen ist, der sich mit steigendem Druck hebt. Durch die hier vorgeschlagene Anordnung wird die Höhe des Druckanzeigers erfaßt, wobei bei einer bestimmten Höhe das Reed-Relais 3 anspricht.

Die optische Kontrolle des jeweiligen Drucks in dem Kochtopf bleibt durch die Sichtbarkeit des Oberteils 9 des Anzeigegehäuses möglich.

Die Querschnittsdarstellung von Fig. 4 zeigt, daß das auf dem Deckelgriff 21 aufsitzende Mittel 40 zum Abfragen des jeweiligen Drucks in dem Dampfdruckkochtopf mit einer Anschlußbuchse 13 versehen ist, die zur Aufnahme eines Steckers dient, an den ein zweiadriges Kabel 51 angeschlossen ist, das zu der Kochstelle 30 führt.

Der Grundgedanke der Erfindung, den jeweils in dem Kochtopf herrschenden Druck zum Steuern der Energiezufuhr zu der Kochstelle zu nutzen, kann auch durch eine andere Ausbildung der Mittel zum Erfassen des Drucks verwirklicht werden, wobei jede Art von Drucksensoren in Betracht kommen. Die hier als besonders bevorzugte Ausbildung dargestellte Ausführungsform hat jedoch den Vorteil, daß die bewährten Dachdruckkochtöpfe mit einer in den Deckelgriff integrierten Druckanzeige entsprechend aus- oder nachgerüstet werden können.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

**Patentansprüche**

1. Dampfdruckkochtopf/Kochstellen-System mit einer Kochstelle mit geringer thermischer Trägheit, bei dem der Dampfdruckkochtopfs (20) mit einem in dessen Deckelgriff (21) integrierten, sich mit steigendem Druck hebenden Druckanzeiger, Mitteln zum Erfassen einer dem jeweiligen Innendruck entsprechenden Information und Mitteln zum Übertragen dieser Information zu der Kochstelle (30) versehen ist und die Kochstelle (30) Mittel zum Steuern der Energiezufuhr in Abhängigkeit von dem jeweiligen Innendruck des Dampfdruckkochtopfs (20) aufweist,
dadurch gekennzeichnet, daß das Mittel zum Erfassen der dem jeweiligen Innendruck des Dampfdruckkochtopfs entsprechenden Information ein Reed-Relais (3) ist, auf das ein von dem Druckanzeiger mechanisch relativ zu diesem verschobener Magnet (5) wirkt.

2. Dampfdruckkochtopf/Kochstellen-System nach Anspruch 1, dadurch gekennzeichnet, daß das Mittel zum Übertragen der dem jeweiligen Innendruck des Dampfkochtopfs (20) entsprechenden Information ein diesen mit der Kochstelle (30) verbindendes Kabel (51) ist, zwischen dessen beiden Adern das Reed-Relais liegt, und das Mittel zum Steuern der Energiezufuhr zu der Kochstelle (30) ein Relais (61) aufweist, in dessen Steuerkreis das Reed-Relais liegt.

**Claims**

1. A pressure cooker and hob system comprising a hob having low thermal inertia, in which system the pressure cooker (20) is provided with a pressure indicator built into the cooker lid handle (21), such pressure indicator lifting as the pressure increases, means for detecting data corresponding to the internal pressure at any time, and means for transmitting such data to the hob (30) and the hob (30) comprises means for controlling the energy supply in dependence on the internal pressure of the pressure cooker (20) at any time,
characterised in that the means for detecting the data corresponding to the internal pressure of the pressure cooker at any time is a reed relay (3), which is subject to the action of a magnet (5) which is mechanically displaced by and relative to the pressure indicator.

2. A pressure cooker and hob system according to claim 1, characterised in that the means for transmitting the data corresponding to the internal pressure of the pressure cooker (20) at any time is a cable (51) which connects the cooker to the hob (30), and between the two cores of which the reed relay is disposed, and the means for controlling the energy supply to the hob (30) comprises a relay (61), in whose control circuit the reed relay is situated.

**Revendications**

1. Système à poste de cuisson et autocuiseur, comportant un poste de cuisson à faible inertie thermique, l'autocuiseur (20) du système étant pourvu d'un indicateur de pression intégré dans son manche de couvercle (21) et se soulevant lorsque la pression augmente, de moyens pour relever une information correspondant à la pression intérieure, et de moyens pour transmettre cette information au poste de cuisson (30), et le poste de cuisson (30) comportant des moyens pour commander l'alimentation en énergie en fonction de la pression intérieure de l'autocuiseur (20),
caractérisé en ce que le moyen pour relever l'information correspondant à la pression intérieure de l'autocuiseur, est un relais à lame souple et contacts scellés (3) sur lequel agit un aimant (5) déplacé mécaniquement par rapport à celui-ci, par l'indicateur de pression.

2. Système à poste de cuisson et autocuiseur, selon la revendication 1, caractérisé en ce que le moyen pour transmettre l'information correspondant à la pression intérieure de l'autocuiseur (20), est un câble (51), qui relie l'autocuiseur au poste de cuisson (30), entre les deux conducteurs duquel est disposé le relais à lame souple et contacts scellés, et en ce que le moyen pour commander l'alimentation en énergie du poste de cuisson (30) comprend un relais (61) dans le circuit de commande duquel est disposé le relais à lame souple et contacts

scellés.

Fig. 3

Fig. 4

Fig. 1

Fig. 2